# EUROPEAN PATENT APPLICATION

(11) **EP 2 478 776 A1**
(43) Date of publication of application: **25.07.2012**
(21) Application number: 10815247.1
(22) Date of filing: 16.08.2010
(51) Int. Cl.: A23L 1/226, A23L 1/19, A23L 1/238

(54) **TASTE ENHANCING AGENT**

(30) Priority: 14.09.2009 JP 2009211365
(71) Applicant: J-Oil Mills, Inc., Tokyo 104-0044 (JP)
(72) Inventor: YAMAGUCHI Susumu, Tokyo 104-0044 (JP); USHIO Hideki, Tokyo 108-8477 (JP); IWANAGA Daigo, Tokyo 108-8477 (JP); SHINODA Akira, Tokyo 108-8477 (JP); FUJIWARA Hidenori, Tokyo 104-0044 (JP); KIYOHARA Reiko, Tokyo 104-0044 (JP)
(74) Representative: Woods, Geoffrey Corlett
(86) International application number: PCT/JP2010/063828
(87) International publication number: WO 2011/030650

(57) **Abstract**

Disclosed is a taste enhancing agent for achieving sufficient saltiness or sweetness even in cases where the salt content or sugar content in food is reduced. Specifically disclosed is a taste enhancing agent which contains one or more substances selected from among linear aliphatic aldehydes having 3-10 carbon atoms and linear aliphatic alcohols having 4-10 carbon atoms as active ingredients. The amount of salt content or sugar content added to food can be reduced by adding the taste enhancing agent to the food.

## Description

### Technical Field

The present invention provides a taste enhancing agent which enhances sweetness, saltiness and/or umami, a method of improving taste of food by enhancing sweetness, saltiness and/or umami, and a food product with reduced salt or sugar therein for preventing lifestyle-related diseases.

### Background Art

In April, 2008, the Ministry of Health, Labour and Welfare introduced a new medical checkup system aiming at prevention and amelioration of metabolic syndrome (visceral fat syndrome) for insured individuals aged 40 and over and their dependents among those who are covered by medical insurance (national health insurance, employee's health insurance), and imposed an implementation of medical checkup and health guidance upon health insurance unions. According to the national survey conducted by the Ministry of Health, Labour and Welfare, one in two males aged 40 to 74 and one in five females aged 40 to 74 have "metabolic syndrome" or pre-metabolic syndrome, which estimates about 20 million people having metabolic syndrome or pre-metabolic syndrome.

Metabolic syndrome is thought to trigger lifestyle-related diseases such as myocardial infarction, cerebral apoplexy and the like, which tend to directly cause death. Prevention of lifestyle-related diseases requires changes in living environments such as daily exercise or improved diet. In contrast to exercise for which finding time may be difficult, dietary habit can possibly prevent lifestyle-related diseases such as hyperlipidemia, abnormal glucose tolerance and hypertension by cutting back on high-calorie meals and reducing dietary intake of sodium chloride.

To meet the consumers' need of reducing such dietary intake of sodium chloride, food manufacturers have been extensively developing products with reduced- or low-salt. However, simply reducing salt content causes a problem of spoiling a balance of taste. In order to solve this problem, a method of using a salt substitute such as potassium chloride has been attempted, but it shows a problem of reducing taste due to extra taste such as bitterness.

Moreover, a method of providing low-salt food and drink with enhanced saltiness has also been attempted. Methods of adding koji hydrolyzate (Patent literature 1), saturated aliphatic monocarboxylic acid (Patent Literature 2), γ-aminobutyric acid and organic acid (Patent Literature 3) and amino acid and succinic acid (Patent Literature 4) as a saltiness-enhancing ingredient have been proposed. However, each of them gives characteristic taste and/or smell, causing a problem of spoiling a flavor of food and drink. In the patent literatures 5, a method of enhancing saltiness using trehalose has been proposed. However, trehalose is difficult to be used in the food having a low water content because of its low solubility in water, as well as its poor solubility in the mouth. Moreover, in Patent Literature 6, provided is a method of enhancing saltiness by adding sorbitol, a sugar alcohol having sweetness in its nature, and/or highly glycosylated and reduced starch syrup. However, it is not sufficient in terms of prevention of lifestyle-related diseases since carbohydrates are added.

On the other hand, in Patent Literature 7proposes a method of improving taste of food, a body taste-improving agent having as active ingredients decomposed products of long chain highly-unsaturated fatty acids or an extract thereof. However, disclosed is that for the ingredients contained in the decomposed product, the number of carbon atoms is preferably 10-15, and among others, more particularly an aldehyde having two or more double bonds is preferred. Moreover, it is not described therein that taste such as sweetness can be enhanced while taste substances such as sodium chloride can be reduced.

Moreover, in Patent Literature 8, a low fat and oils-containing roux is proposed, the roux having a similar richness characteristic for fats and oils to that in the rouxcontaining a large amount of fat and oil is used. However, as the above invention is to solve a problem unique to roux, it will require starch and a thickening substance to maintain its texture. Moreover, although linear saturated aliphatic aldehydes having 4-10 carbon atoms are mentioned for aldehydes, it is not described therein that they can enhance taste intensity and can reduce a taste substance such as sodium chloride.

In Patent Literature 9, proposed is a method of manufacturing a flavoring compound by oxidizing fatty acid in the presence of an oxidizing agent and an antioxidizing agent. In the specification thereof, saturated aldehydes such as n-pentanal, n-hexanal, n-heptanal and n-nonanal are described as ingredients contained in the obtained flavoring mixture. Moreover, in Patent Literature 10, disclosed is a flavoring composition which can be obtained by oxidation of fatty acid other than milk fat and the like. It is described therein that ingredients contained in the flavoring composition include alkanals having 5-12 carbon atoms. However, it is not described therein that any of them can enhance taste intensity and can reduce a taste substance such as sodium chloride.

### Prior Art

### Patent Literature

Patent Literature 1: Japanese Patent Application Laid-open No. Hei 2-53456
Patent Literature 2: Japanese Patent Application Laid-open No. Hei 5-184326
Patent Literature 3: Japanese Patent Application Laid-open No. 2004-275097
Patent Literature 4: Japanese Patent Application Laid-open No. 2002-345430
Patent Literature 5: Japanese Patent Application Laid-open No. Hei 10-66540
Patent Literature 6: Japanese Patent Application Laid-open No. 2008-99624
Patent Literature 7: W02005/004634
Patent Literature 8: Japanese Patent Application Laid-open No. 2001-269142
Patent Literature 9: Japanese Patent Application Laid-open No. Hei 4-229151
Patent Literature 10: Japanese Patent No. 3220155

### SUMMARY OF INVENTION

### Problem to be solved by the Invention

Therefore, an ingredient remains to be found which sufficiently enhances saltiness, sweetness, and/or even umami in cases when salt or sugar contents in food are reduced for the prevention of lifestyle-related diseases. In view of these problems, a purpose of the present invention is to provide a taste enhancing agent to obtain sufficient saltiness and/or sweetness even in cases when salt or sugar contents in food are reduced for the prevention of lifestyle-related diseases.

### Means to solve the Problem

The present inventors have conducted extensive studies to achieve the above purpose, and found that linear aliphatic aldehydes having 3-10 carbon atoms and linear aliphatic alcohols having 4-10 carbon atoms, which do not present sweetness, saltiness and umami by themselvess, show an effect of enhancing sweetness, saltiness and umami, thereby completing the present invention.

The present invention is related to a taste enhancing agent comprising one or more active ingredients selected from linear aliphatic aldehydes having 3-10 carbon atoms and linear aliphatic alcohols having 4-10 carbon atoms.

The linear aliphatic aldehydes for the taste enhancing agent are preferably saturated linear aliphatic aldehydes.

Moreover, the linear aliphatic aldehydes for the taste enhancing agent preferably have 5-7 carbon atoms, and more preferably is n-hexanal.

The linear aliphatic alcohols for the taste enhancing agent are preferably unsaturated linear alcohols.

Moreover, the linear aliphatic alcohols for the above enhancing agent preferably have 6-8 carbon atoms, and more preferably is 1-octen-3-ol.

The "taste enhancing" according to the above taste enhancing agent is enhancement in saltiness, sweetness and/or umami.

Moreover, the present invention relates to a method of reducing salt and/or sugar usage in food by adding, to food, one or more substances selected from linear aliphatic aldehydes having 3-10 carbon atoms and linear aliphatic alcohols having 4-10 carbon atoms.

The linear the aliphatic aldehydes of the above method are preferably saturated linear aliphatic aldehydes.

Moreover, the linear aliphatic aldehydes of the above method preferably have 5-7 carbon atoms, and more preferably is n-hexanal.

The linear aliphatic alcohols of the above method are preferably unsaturated linear alcohols.

Moreover, the linear aliphatic alcohols of the above method preferably have 6-8 carbon atoms, and more preferably is 1-octen-3-ol.

The amount of the linear aliphatic aldehydes contained in the food of the above method is preferably 0.001-10000 ppm, more preferably 0.01-1000 ppm, and even more preferably 0.1-1000 ppm.

Moreover, the amount of the linear aliphatic alcohols contained in the food of the above method is preferably 0.01-1000 ppm and more preferably 0.1-1000 ppm.

Moreover, the present invention relates to a food product in which salt and/or sugar usage therein is reduced by adding, to the food, one or more substances selected from linear aliphatic aldehydes having 3-10 carbon atoms and linear aliphatic alcohols having 4-10 carbon atoms.

### Advantageous Effect of the Invention

The taste enhancing agent of the present invention improves taste of food by enhancing sweetness, saltiness and umami, and the method of the present invention provides a food product having reduced salt or sugar content therein for the prevention of lifestyle-related diseases.

### BEST MODE FOR CARRYTING OUT THE INVENTION

The taste enhancing agent of the present invention comprises one or more active ingredients selected from linear aliphatic aldehydes having 3-10 carbon atoms and linear aliphatic alcohols having 4-10 carbon atoms. As the active ingredients for the taste enhancing agent, two or more substances may be selected from either the linear aliphatic aldehydes or the linear aliphatic alcohols, or one or more substances may be selected from each of the linear aliphatic aldehydes and the linear aliphatic alcohols.

The above linear aliphatic aldehydes preferably have 5-7 carbon atoms, and more preferably is n-hexanal. Sufficient effects cannot be obtained in case of linear aliphatic aldehydes having the number of carbon atoms other than the above-mentioned number.

The above linear aliphatic alcohols preferably have 6-8 carbon atoms, and more preferably is 1-octen-3-ol. Sufficient effects cannot be obtained in case of linear aliphatic alcohols having the number of carbon atoms other than the above-mentioned number.

Taste enhancing due to the taste enhancing agent of the present invention is enhancement in saltiness, sweetness, and/or umami. Saltiness is a taste sensed when a salty substance such as salt (sodium chloride) is introduced into the mouth. Sweetness is a taste sensed when a sweet substance such as sugar, honey, maple syrup, erythritol, trehalose or aspartame is introduced into the mouth. Moreover, umami is a taste sensed when an umami substance such as glutamic acid or inosinic acid is introduced into the mouth.

Although there is no particular limitation in the amount of the linear aliphatic aldehydes and the linear aliphatic alcohols contained in the above taste enhancing agent, the amount is preferably such that the content of active ingredients in the food will become the above content when an appropriate amount of the taste enhancing agent is added in the food.

The taste enhancing agent of the present invention may be a composition formulated with auxiliary agents or food additive which can be used in food.

Examples of the auxiliary agents which can be used in the food include saccharides such as glucose (dextrose), maltose, fructose (fruit sugar), galactose, trehalose, oligosaccharide, sorbit, milk sugar, sucrose, white sugar, purified white sugar, erythritol, xylitol, sorbitol, mannitol, paratinose, reduced paratinose, reduced malt sugar powder, starch syrup, carmellose, dextrin; carriers or excipients such as cornstarch, pregelatinized starch, partially pregelatinized starch, potato starch, cornstarch, hydroxypropyl starch, amino acid, kaoline, silicic anhydride, silicic acid, aluminum silicate, sodium bicarbonate, calcium phosphate, monobasic calcium phosphate, calcium carbonate, magnesium oxide, aluminum hydroxide, fatty acid or a salt thereof, fatty acid monoglyceride and diglyceride, alcohol, viscous paraffin, propylene glycol, ethylene glycol, polyethylene glycol, glycerin; binders such as crystalline cellulose, crystalline cellulose carmellose sodium, methylcellulose, hydroxypropyl cellulose, low-substituted hydroxypropyl cellulose, hydroxypropyl methylcellulose, hydroxypropyl methylcellulose phthalate, hydroxypropyl methylcellulose acetate succinate, carmellose sodium, ethylcellulose, carboxymethyl ethyl cellulose, hydroxyethyl cellulose, dextrin, pullulan, gum arabic, powdered gum arabic, agar, gelatin; lubricants such as synthetic aluminum silicate, dried aluminum hydroxide gel, magnesium aluminometasilicate, dibasic calcium phosphate, anhydrous dibasic calcium phosphate, wax, hydrogenated vegetable oil, polyethylene glycol, light anhydrous silicic acid, synthetic aluminum silicate, stearic acid, macrogol, talc, magnesium stearate, calcium stearate, hydrous silicon dioxide, sucrose fatty acid ester; lubricating agents; disintegrating agents such as crystalline cellulose, methylcellulose, low-substituted hydroxypropylcellulose, carmellose, carmellose calcium, carmellose sodium, croscarmellose sodium, wheat starch, rice starch, cornstarch, potato starch, partially pregelatinized starch, hydroxypropyl starch, carboxymethyl starch sodium, tragacanth; surfactants such as soybean lecithin, sucrose fatty acid ester, polyoxyl stearate, polyoxyethylene polyoxypropylene glycol, sorbitan sesquioleate, sorbitan trioleate, sorbitan monostearate, sorbitan monopalmitate, sorbitan monolaurate, polysorbate, glyceryl monostearate, sodium lauryl sulfate, lauromacrogol; solubilizing agents such as sodium phosphate; pH adjusters such as lactic acid, gluconic acid, succinic acid, fumaric acid, citric acid, L-malic acid, DL-malic acid, glacial acetic acid, acetic acid, glucono delta lactone, L-tartaric acid, DL-tartaric acid, hydrochloric acid, sodium citrate, sodium hydroxide, potassium hydroxide, sodium bicarbonate, sodium carbonate; emulsifiers; stabilizing agents; antioxidants; preservatives; wetting agents; coloring agents.

Examples of the food additives include grain based powder such as starch, fats and oils, emulsifiers, thickeners. Examples of the starches include cornstarch, waxy cornstarch, high amylose cornstarch, potato starch, wheat starch, tapioca starch, mung bean starch, sago starch, rice starch, green pea starch and processed starches thereof which are subjected to physical or chemical treatments such as esterification, etherification, cross-linking, acid treatment, oxidation, heat and moisture treatments, or pregelatinization, alone or in combination.

Examples of the fats and oils include soybean oil, soybean germ oil, rapeseed oil, high oleic acid rapeseed oil, corn oil, sesame oil, sesame salad oil, perilla oil, linseed oil, peanut oil, safflower oil, high oleic acid safflower oil, sunflower oil, high oleic acid sunflower oil, high linoleic acid sunflower oil, midoleic sunflower oil, cottonseed oil, grape seed oil, macadamia nut oil, hazelnut oil, walnut oil, pumpkin seed oil, camellia oil, tea seed oil, perilla oil, olive oil, rice bran oil, wheat germ oil, palm oil, palm olein, palm seed oil, coconut oil, cacao oil, algae oil, and combinations of one or more substances selected from hydrogenerated oils, transesterificated oils, fractionated oils, etc. of these fats and oils.

Examples of the emulsifiers may be any emulsifiers commonly used in food, and one of the followings alone or two or more of the followings in combination can be used: glycerin fatty acid ester, glycerin organic acid ester, sorbitan fatty acid ester, propylene glycol fatty acid ester, polyglyceryl fatty acid ester, polyglyceryl condensed ricinoalate, sucrose fatty acid ester, calcium stearoyl lactate, alkylglycosidic acid, erythritol fatty acid esters, polyoxyethylene sorbitan fatty acid esters, lecithin, enzymatic-degradated lecithin, enzyme-treated lecith.

Example of the thickeners include polysaccharides which increase viscosity in an aqueous solution, namely, gum arabic, arabinogalactan, guar gum, xanthane gum, psyllium seed gum, gellan gum, tara gum, locust bean gum, tamarind seed gum, soybean water-soluble polysaccharides (hemicellulose), sodium alginate, pullulan, pectin, karaya gum, ghatti gum, tragacanth gum, curdlan, glucomannan, chitin, chitosan, microfibrillated cellulose, microcrystalline cellulose and the like.

In addition, the following can be also added: protein-derived substances such as collagen peptides, lactoprotein peptides, casein peptides, oligopeptide, lactoprotein concentrates, pea proteins, gelatin; fibers such as soy bean fibers, pea fibers; dextrins such as highly branched dextrin.

Moreover, the taste enhancing agent of the present invention may be a composition which is combined with salty substances such as salt (sodium chloride); sweet substances such as sugar, honey, maple syrup, erythritol, trehalose, aspartame; umami substances such as glutamic acid, inosinic acid, which are taste ingredients to be enhanced.

Moreover, in the method of the present invention for reducing salt and/or sugar usage, one or more substances selected from linear aliphatic aldehydes having 3-10 carbon atoms and linear aliphatic alcohols having 4-10 carbon atoms are added in food. For ingredients which may be added, two or more substances may be selected from either of the linear aliphatic aldehydes or the linear aliphatic alcohols, or one or more substances may be selected from each of the linear aliphatic aldehydes and the linear aliphatic alcohols.

The above linear aliphatic aldehydes preferably have 5-7 carbon atoms, and more preferably is n-hexanal. Sufficient effects cannot be obtained in case of linear aliphatic aldehydes having the number of carbon atoms other than the above-mentioned number. Moreover, the above linear aliphatic alcohols preferably have 6-8 carbon atoms, and more preferably is 1-octen-3-ol. Sufficient effects cannot be obtained in case of linear aliphatic alcohols having the number of carbon atoms other than the above-mentioned number.

The content of the linear aliphatic aldehydes in food according to the present method is preferably 0.001-10000 ppm, more preferably 0.01-1000 ppm, and even more preferably 0.1-1000 ppm. Taste enhancing effects can not be achieved in cases when the content is low, while the strong particular smell of aldehydes spoils a flavor of the food in cases when the content is high.

Moreover, the content of the linear aliphatic alcohols in food according to the present method is preferably 0.01-1000 ppm and more preferably 0.1-1000 ppm. Taste enhancing effects can not be achieved in case when the content is low, while the strong particular smell of alcohols spoils a flavor of the food in case when the content is high.

Here, there is no particular limitation for target foods, which may include, for example, fats and oils-containing foods such as soup, curry, jiao-zi (steam-baked meat pie) and shaomai (Chinese-style steamed meat or shrimp dumpling); and foods which contain little fats and oils such as clear soup, miso soup, consomme soup and Chinese soup. Moreover, they also include liquid seasonings such as soy sauce and sauce; semisolid seasonings such as miso paste; and powdered seasonings such as powdered soup included in a package of instant noodles and the like.

Moreover, sweet substances, salty substances and umami substances in food to be taste-enhanced may originate from seasonings such as sugar, salt, sodium glutamate; or from ingredients such as carbohydrates, minerals, amino acids originally contained in the food.

### Examples

Examples and comparative examples of the present invention are shown below, but the scope of the present invention is not limited to those.

All sensory evaluation of taste was performed by individuals wearing a nose clip. The evaluation was performed by groups of three individuals, and the scores were averaged.

The following aldehydes were used.
n-propanal: KANTO CHEMICAL CO., INC (32425-30)
n-butanal: Wako Pure Chemical Industries, Ltd (025-03933)
n-pentanal: Wako Pure Chemical Industries, Ltd (B21389)
n-hexanal: SIGMA-ALDRICH (115606)
n-heptanal: Tokyo Chemical Industry Co., Ltd. (H0025)
n-octanal: Tokyo Chemical Industry Co., Ltd. (00044)
n-decanal: Tokyo Chemical Industry Co., Ltd. (D0032)
2-hexenal: Tokyo Chemical Industry Co., Ltd. (H0345)
2,4-decadienal: Wako Pure Chemical Industries, Ltd (040-20122)
n-undecanal: Tokyo Chemical Industry Co., Ltd. (U0009)
n-dodecanal: Tokyo Chemical Industry Co., Ltd. (D979)

### Examples 1-9

To a 0.2% aqueous sodium glutamate (MSG) solution (= umami), a 0.8% aqueous salt (NaCl) solution (= saltiness) and a 2% aqueous sucrose solution (= sweetness) were added 10 ppm linear aliphatic aldehydes having 3-12 carbon atoms shown in Table 1, respectively. Sensory evaluation was performed in which intensity of taste sensed when each of the aqueous solutions is introduced into the mouth is defined as "Intensity of umami" for the aqueous MSG solution, "Intensity of saltiness" for the aqueous NaCl solution and "Intensity of sweetness" for the aqueous sucrose solution. The score of aldehyde-free taste intensity was set to 3.0, and taste intensity upon addition of aldehyde was evaluated as follows. The results are shown in Table 1.
1.0: Much weaker
2.0: Weaker
3.0: Similar
4.0: Stronger
5.0: Much Stronger

**Table 1**

| | aldehydes added | The number of carbon atoms | The number of double bonds | Aqueous MSG solution | Aqueous NaCl solution | Aqueous sucrose solution |
|---|---|---|---|---|---|---|
| Example 1 | n-propanal | 3 | 0 | 3.5 | 3.5 | 3.5 |
| Example 2 | n-butanal | 4 | 0 | 3.5 | 3.5 | 3.5 |
| Example 3 | n-pentanal | 5 | 0 | 4.5 | 4.5 | 4.0 |
| Example 4 | n-hexanal | 6 | 0 | 5.0 | 5.0 | 4.5 |
| Example 5 | n-heptanal | 7 | 0 | 4.5 | 4.5 | 4.0 |
| Example 6 | n-octanal | 8 | 0 | 3.8 | 3.8 | 3.5 |
| Example 7 | n-decanal | 10 | 0 | 3.5 | 3.5 | 3.5 |
| Example 8 | 2-hexenal | 6 | 1 | 3.8 | 3.8 | 3.8 |
| Example 9 | 2,4-decadienal | 10 | 2 | 3.5 | 3.5 | 3.5 |
| Comparative Example 1 | Not added | - | - | 3.0 | 3.0 | 3.0 |
| Comparative Example2 | n-undecanal | 11 | 0 | 3.0 | 3.0 | 3.0 |
| Comparative Example 3 | n-dodecanal | 12 | 0 | 3.0 | 3.0 | 3.0 |

Enhancement in all of umami, saltiness and sweetness was observed when adding 10 ppm linear aliphatic aldehydes having 3-10 carbon atoms to each of the aqueous solutions of MSG, NaCl and sucrose.

### Examples 10-15

N-hexanal was added at the amount shown in Table 2, and evaluation was performed as described in Example 4 except for the added amount. The results are shown in Table 2.

**Table 2**

| | Added amount (ppm) | Aqueous MSG solution | Aqueous NaCl solution | Aqueous sucrose solution |
|---|---|---|---|---|
| Example 10 | 0.001 | 3.5 | 3.5 | 3.5 |
| Example 11 | 0.01 | 4.0 | 4.0 | 3.8 |
| Example 12 | 0.1 | 4.2 | 4.2 | 3.8 |
| Example 13 | 1 | 4.3 | 4.3 | 3.8 |
| Example 4 | 10 | 5.0 | 5.0 | 4.5 |
| Example 14 | 100 | 5.0 | 5.0 | 4.5 |
| Example 15 | 1000 | 5.0 | 5.0 | 5.0 |

Enhancement was observed when the added amount was 0.001 or more.

The following alcohols were used.
Ethanol: Wako Pure Chemical Industries, Ltd (057-00451)
1-propanol: Tokyo Chemical Industry Co., Ltd. (P0491)
1-butanol: Tokyo Chemical Industry Co., Ltd. (B0704)
1-pentanol: Tokyo Chemical Industry Co., Ltd. (P0055)
1-hexanol: Wako Pure Chemical Industries, Ltd (087-00513)
1-heptanol: Tokyo Chemical Industry Co., Ltd. (H0033)
1-octanol: Tokyo Chemical Industry Co., Ltd. (00036)
1-nonanol: Tokyo Chemical Industry Co., Ltd. (N0292)
1-decanol: Tokyo Chemical Industry Co., Ltd. (D0031)
1-undecanol: Tokyo Chemical Industry Co., Ltd. (U0005)
1-buten-3-ol: Tokyo Chemical Industry Co., Ltd. (B0695)
1-hexen-3-ol: Tokyo Chemical Industry Co., Ltd. (H0659)
1-octen-3-ol: Tokyo Chemical Industry Co., Ltd. (U0005)
1-decene- 3-ol: Tokyo Chemical Industry Co., Ltd. (D3268)
2,7-octadienol: Tokyo Chemical Industry Co., Ltd. (00243)

### Examples 16-27

To a 0.2% aqueous sodium glutamate (MSG) solution (= umami), a 0.8% aqueous salt (NaCl) solution (= saltiness), a 2% aqueous sucrose solution (= sweetness) were added 10 ppm linear aliphatic alcohols having 2-11 carbon atoms, respectively. Sensory evaluation was performed in which intensity of taste sensed when each of the aqueous solutions is introduced into the mouth is defined as "Intensity of umami" for the aqueous MSG solution, "Intensity of saltiness" for the aqueous NaCl solution and "Intensity of sweetness" for the aqueous sucrose solution. The score of alcohol-free taste intensity was set to 3.0, and taste intensity upon addition was evaluated as follows. The results are shown in Table 3.
1.0: Much weaker
2.0: Weaker
3.0: Similar
4.0: Stronger
5.0: Much stronger

**Table 3**

| | Aldehydes added | The number of carbon atoms | The number of double bonds | Aqueous MSG solution | Aqueous NaCl solution | Aqueous sucrose solution |
|---|---|---|---|---|---|---|
| Example 16 | 1-butanol | 4 | 0 | 3.2 | 3.2 | 3.2 |
| Example 17 | 1-pentanol | 5 | 0 | 3.2 | 3.2 | 3.2 |
| Example 18 | 1-hexanol | 6 | 0 | 3.2 | 3.2 | 3.2 |
| Example 19 | 1-heptanol | 7 | 0 | 3.2 | 3.2 | 3.2 |
| Example 20 | 1-octanol | 8 | 0 | 3.2 | 3.2 | 3.2 |
| Example 21 | 1-nonanol | 9 | 0 | 3.2 | 3.2 | 3.2 |
| Example 22 | 1-decanol | 10 | 0 | 3.2 | 3.2 | 3.2 |
| Example 23 | 1-buten-3-ol | 4 | 1 | 3.2 | 3.2 | 3.5 |
| Example 24 | 1-hexene-3-ol | 6 | 1 | 3.2 | 3.2 | 3.5 |
| Example 25 | 1-octen-3-ol | 8 | 1 | 3.5 | 3.5 | 3.5 |
| Example 26 | 1-decene-3-ol | 10 | 1 | 3.2 | 3.2 | 3.5 |
| Example 27 | 2,7-octadienol | 8 | 2 | 3.2 | 3.2 | 3.5 |
| Comparative Example 4 | Not added | - | - | 3.0 | 3.0 | 3.0 |
| Comparative Example 5 | ethanol | 2 | 0 | 3.0 | 3.0 | 3.0 |
| Comparative Example 6 | propanol | 3 | 0 | 3.0 | 3.0 | 3.0 |
| Comparative Example 7 | 1-undecanol | 11 | 0 | 3.0 | 3.0 | 3.0 |

Enhancement in all of umami, saltiness and sweetness was observed when adding 10 ppm linear aliphatic alcohols having 3-10 carbon atoms to each of the aqueous solutions of MSG, NaCl and sucrose.

### Examples 25, 28-32

The amounts of 1-octen-3-ol shown in Table 4 were added, and evaluation was performed as described in Example 25 except for the added amount. The results are shown in Table 4.

**Table 4**

| | Added amount (ppm) | Aqueous MSG solution | Aqueous NaCl solution | Aqueous sucrose solution |
|---|---|---|---|---|
| Example 28 | 0.01 | 3.2 | 3.2 | 3.2 |
| Example 29 | 0.1 | 3.2 | 3.5 | 3.2 |
| Example 30 | 1 | 3.5 | 3.5 | 3.2 |
| Example 25 | 10 | 3.5 | 3.5 | 3.5 |
| Example 31 | 100 | 3.8 | 3.8 | 3.5 |
| Example 32 | 1000 | 3.8 | 3.8 | 3.5 |

Enhancement was observed when the added amount was 0.01 or more. Examples 33, 34

Evaluation was conducted to find whether salt usage can be reduced by the taste enhancing effects. To a 0.5% aqueous NaCl solution was added 10 ppm n-hexanal or 10 ppm 1-octen-3-ol. Taste intensity was determined in the sensory evaluation where the taste intensity of the 0.5% NaCl solution was set to 3.0. For comparison, sensory evaluation was also performed for a 0.8% and 0.6% concentration of aqueous NaCl solution. The sensory evaluation was evaluated as follows. The results are shown in Table 5.
1.0: Much weaker
2.0: Weaker
3.0: Similar
4.0: Stronger
5.0: Much stronger

**Table 5**

| | The concentration of aqueous NaCl solutions | n-hexanal Added amount (ppm) | 1-octen-3-ol Added amount (ppm) | Scores in sensory evaluation |
|---|---|---|---|---|
| Comparative Example 8 | 0.8% | 0 | 0 | 4.0 |
| Comparative Example 9 | 0.6% | 0 | 0 | 3.5 |
| Comparative Example 10 | 0.5% | 0 | 0 | 3.0 |
| Example 33 | 0.5% | 10 | 0 | 4.0 |
| Example 34 | 0.5% | 0 | 10 | 3.5 |

Saltiness intensity was similar to that of the 0.8% aqueous NaCl solution when 10 ppm n-hexanal was added to the 0.5% aqueous NaCl solution. Moreover, saltiness intensity was similar to that of the 0.6% aqueous NaCl solution when 10 ppm 1-octen-3-ol was added to the 0.5% aqueous NaCl solution. Therefore, the evaluation demonstrated that salt usage in food can be reduced by adding n-hexanal and 1-octen-3-ol.

### Examples 35, 36

Evaluation was conducted to find whether sucrose usage can be reduced by the taste enhancing effects. To a 1.5% aqueous sucrose solution was added 10 ppm n-hexanal or 10 ppm 1-octen-3-ol. Taste intensity was determined in the sensory evaluation where the taste intensity of the 1.5% sucrose solution was set to 3.0. For comparison, sensory evaluation was also performed for a 2.0% and 1.8% concentration of aqueous sucrose solution. The sensory evaluation was evaluated as follows. The results are shown in Table 6.
1.0: Much weaker
2.0: Weaker
3.0: Similar
4.0: Stronger
5.0: Much stronger

**Table 6**

| | Sucrose concent ration | n-hexanal Added amount (ppm) | 1-octen-3-ol Added amount (ppm) | Scores in sensory evaluation |
|---|---|---|---|---|
| Comparative Example 11 | 2.0% | 0 | 0 | 4.0 |
| Comparative Example 12 | 1.8% | 0 | 0 | 3.5 |
| Comparative Example 13 | 1.5% | 0 | 0 | 3.0 |
| Example 35 | 1.5% | 10 | 0 | 4.0 |
| Example 36 | 1.5% | 0 | 10 | 3.5 |

Sweetness intensity was comparable to that of the 2.0% aqueous sucrose solution when 10 ppm n-hexanal was added to the 1.5% aqueous sucrose solution. Moreover, sweetness intensity was similar to that of the 1.8% aqueous sucrose solution when 10 ppm 1-octen-3-ol was added to the 1.5% aqueous sucrose solution. Therefore, the evaluation demonstrated that sucrose usage in food can be reduced by adding n-hexanal and 1-octen-3-ol.

### Examples 37-43

Rich soy sauce (KIKKOMAN CORP.) was diluted to 2% in water, and the aldehydes shown in Table 7 were added to 10 ppm. Sensory evaluation was performed for "Intensity of Umani " and " Intensity of Saltiness ". The score of aldehyde-free taste intensity was set to 3.0, and taste intensity upon addition was evaluated as follows. The results are shown in Table 7.
1.0: Much weaker
2.0: Weaker
3.0: Similar
4.0: Stronger
5.0: Much stronger

**Table 7**

| | Aldehydes added | The number of carbon atoms | Double bonds | Intensity of umami | Intensity of saltiness |
|---|---|---|---|---|---|
| Comparative Example 14 | Not added | - | - | 3.0 | 3.0 |
| Example 37 | n-propanal | 3 | 0 | 3.5 | 3.5 |
| Example 38 | n-butanal | 4 | 0 | 3.5 | 3.5 |
| Example 39 | n-pentanal | 5 | 0 | 4.2 | 4.2 |
| Example 40 | n-hexanal | 6 | 0 | 4.5 | 4.5 |
| Example 41 | n-heptanal | 7 | 0 | 4.0 | 4.0 |
| Example 42 | n-octanal | 8 | 0 | 3.5 | 3.5 |
| Example 43 | n-decanal | 10 | 0 | 3.5 | 3.5 |

"Intensity of umani" and "Intensity of saltiness" were enhanced by adding the aldehydes to the soy sauce solution.

### Examples 44-50

To whipped cream ("Dessert Whip," Meiji Dairies Corporation) was added the aldehydes shown in Table 8 at 100 ppm. Sensory evaluation was performed for "Intensity of sweetness". The score of aldehyde-free taste intensity was set to 3.0, and taste intensity upon addition was evaluated as follows. The results are shown in Table 8.
1.0: Much weaker
2.0: Weaker
3.0: Similar
4.0: Stronger
5.0: Much stronger

**Table 8**

| | Aldehydes added | The number of carbon atoms | Double bonds | Intensity of sweetness |
|---|---|---|---|---|
| Comparative Example 15 | Not added | - | - | 3.0 |
| Example 44 | n-propanal | 3 | 0 | 3.5 |
| Example 45 | n-butanal | 4 | 0 | 3.5 |
| Example 46 | n-pentanal | 5 | 0 | 4.2 |
| Example 47 | n-hexanal | 6 | 0 | 4.5 |
| Example 48 | n-heptanal | 7 | 0 | 4.0 |
| Example 49 | n-octanal | 8 | 0 | 3.5 |
| Example 50 | n-decanal | 10 | 0 | 3.5 |

"Intensity of sweetness" was enhanced by adding the aldehydes to the whipped cream.

### Example 51

To a 0.2% aqueous sodium glutamate (MSG) solution (= umami), a 0.8% aqueous salt (NaCl) solution (= saltiness), a 2% aqueous sucrose solution (= sweetness) were added 1 ppm n-hexanal and 1ppm 1-octene-3-ol each, respectively. Sensory evaluation was performed in which the intensity of taste sensed when each of the aqueous solutions is introduced into the mouth is defined as "Intensity of umami" for the aqueous MSG solution, "Intensity of saltiness" for the aqueous NaCl solution and "Intensity of sweetness" for the aqueous sucrose solution. The score of additive-free taste intensity was set to 3.0, and taste intensity upon addition was evaluated as follows. The results are shown in Table 9.
1.0: Much weaker
2.0: Weaker
3.0: Similar
4.0: Stronger
5.0: Much stronger

**Table 9**

| | | Aqueous MSG solution | Aqueous NaCl solution | Aqueous sucrose solution |
|---|---|---|---|---|
| Comparative Example 16 | Not added | 3.0 | 3.0 | 3.0 |
| Example 51 | n-hexanal 1ppm+ 1-octen-3-ol 1ppm | 4.5 | 4.5 | 4.0 |

Enhancement in all of umami, saltiness and sweetness was observed when adding 1 ppm n-hexanal and 1ppm 1-octene-3-ol to each of the aqueous solutions of MSG, NaCl and sucrose.

## Claims

1. A taste enhancing agent having one or more active ingredients selected from linear aliphatic aldehydes having 3-10 carbon atoms and linear aliphatic alcohols having 4-10 carbon atoms.

2. The taste enhancing agent according to Claim 1, the linear aliphatic aldehydes are saturated linear aliphatic aldehydes.

3. The taste enhancing agent according to Claim 1 or 2, the number of carbon atoms on the linear aliphatic aldehydes is 5-7.

4. The taste enhancing agent according to Claim 1, the linear aliphatic aldehydes is n-hexanal.

5. The taste enhancing agent according to Claim 1, the linear aliphatic alcohols are unsaturated linear aliphatic alcohols.

6. The taste enhancing agent according to Claim 1 or 5, the number of carbon atoms on the linear aliphatic alcohols is 6-8.

7. The taste enhancing agent according to Claim 1, the linear aliphatic alcohols is 1-octen-3-ol.

8. The taste enhancing agent according to any one of Claims 1 to 7, taste enhancing is any of enhancement in saltiness, sweetness or umami.

9. A method for reducing salt and/or sugar usage in food, the method comprising adding, to the food, one or more substances selected from linear aliphatic aldehydes having 3-10 carbon atoms and linear aliphatic alcohols having 4-10 carbon atoms.

10. The method according to Claim 9, the amount of the linear aliphatic aldehydes added in the food is 0.001-10000 ppm.

11. The method according to Claim 9, the amount of the linear aliphatic alcohols added in the food is 0.01-1000 ppm.

12. A food product manufactured by the method according to any one of Claims 9 to 11.
